# EUROPEAN PATENT SPECIFICATION

(11) **EP 2 337 267 B1**
(45) Date of publication and mention of the grant of the patent: **12.06.2013**
(21) Application number: 09306263.6
(22) Date of filing: 18.12.2009
(51) Int. Cl.: H04L 12/24

(54) **Method of displaying network information**
Verfahren zum Anzeigen von Netzwerkinformation
Procédé d'affichage d'information du réseau

(43) Date of publication of application: 22.06.2011
(73) Proprietor: Alcatel Lucent, 75007 Paris (FR)
(72) Inventor: Paparella, Andrea, 21052 Busto Arsizio (Varese) (IT); Riglietti, Roberto, 20059 Vimercate (MI) (IT); Donadio, Pasquale, 80129 Napoli (NA) (IT)
(74) Representative: Urlichs, Stefan

(56) References cited:
- EP-A2- 1 094 635
- US-A1- 2002 113 816
- US-B1- 6 484 190

## Description

### Field of the invention

The invention relates to a method of displaying network information.

### Background

For displaying information about network resources of a network, it is known to provide a graphical user interface to a user, for instance a network manager. Such a graphical user interface may make use of a three-dimensional cone tree for displaying information about network resources of a network.

Depending on input actions taken by the user, the cone tree can be modified for displaying a modified amount of information. This allows the user to grasp the displayed information more easily.

The document US 2002/0113816 discloses a graphical user interface for representing hierarchical networks. Network elements are displayed in a tree-like structure.

The document US 6,484,190 B1 discloses a subset search tree integrated graphical interface. A tree structure is displayed with different hierarchical levels. A user may enter search criteria into a search field that is associated to a specific hierarchical level. It is searched for an occurrence of the entered search criteria within hierarchical levels that are subordinate to the specific hierarchical level. Only such hierarchical levels, which are subordinate to the specific hierarchical level and which match the entered search criteria are then displayed.

### Summary

A method of displaying network information is proposed.

Representation data which represents network resources of a network is provided. Furthermore, assignment data which assigns the network resources to hierarchy levels of the network is provided. Further still, declaration data which declares dependencies between the network resources is provided.

A graphical representation of a cone tree is generated. Network resources which are assigned to a same hierarchy level are displayed as nodes of a same sphere of the cone tree. Dependencies between dependent network resources are indicated as displayed links connecting the nodes representing the dependent network resources.

A user is presented a list of hierarchy levels. The user selects hierarchy levels from the list. Upon the selection of one or more hierarchy levels from the list by the user, only nodes which represent network resources that belong to the selected hierarchy levels are displayed in the cone tree.

The proposed method has the advantage, that a user is able to easily modify the amount of displayed information, by selecting or deselecting hierarchy levels of network resources for controlling a display of the network resources of the selected or deseleded hierarchy levels.

### Brief description of the drawings

Figures 1a, 1b, 2a, 2b each show a cone tree with links indicating hierarchical dependencies as well as a list of hierarchy levels.
Figure 3 shows a cone tree with links indicating transmission connections between the displayed nodes, a list of hierarchy levels and a list of dependencies.

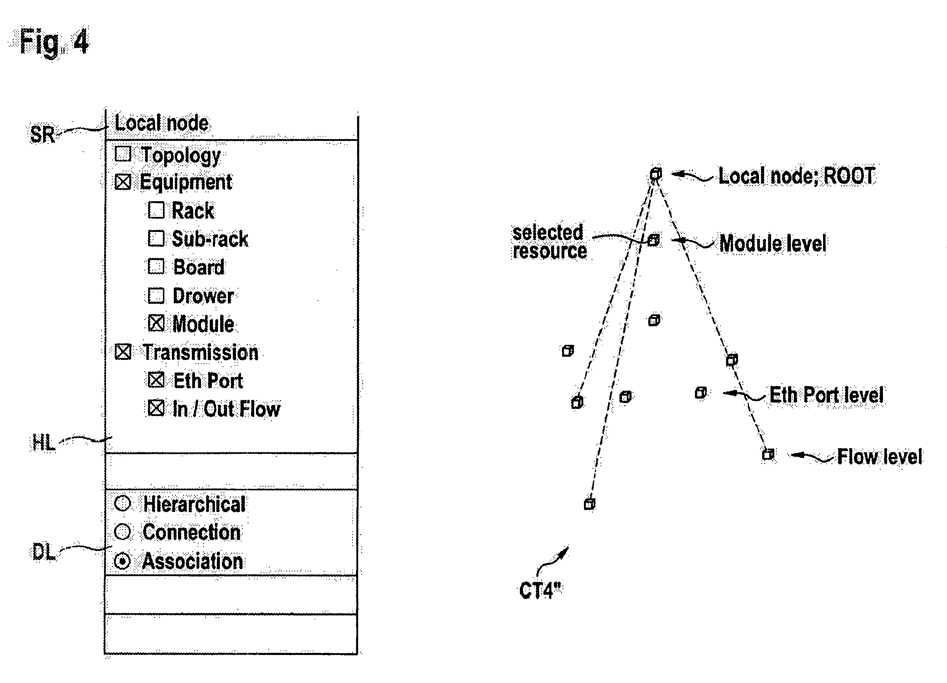

Figure 4 shows a cone tree with links indicating configuration profiles shared by network resources of different hierarchy levels, a list of hierarchy levels and a list of dependencies.
Figure 5 shows a device for generating a graphical representation of network information according to a first embodiment.
Figure 6 shows a device for generating a graphical representation of network information according to a second embodiment.

### Description of embodiments

Proposed is a method of displaying network information, which relies on a cone tree, containing different nodes, wherein each node represents a network resource of the network.

In a network, a first type of network resources are network nodes of the network. Depending on the topology of the network, network nodes may be assigned to different sub-networks, wherein also a sub-network may contain further sub-networks, containing further nodes. Each network level or sub-network level of the network represents a hierarchy level to which a network node is assigned. Two nodes, which are connected to each other via a link and which belong to two neighboring hierarchy levels are defined as being hierarchically directly dependent. Furthermore, two network nodes which belong to non-neighboring hierarchy levels, and which can reach each other via multiple links of other network nodes by either only ascending or only descending through the hierarchy levels, are defined as being hierarchically indirectly dependent.

Furthermore, a second type of network resources are the different types of equipment of a network node. The different types of equipment of the network nodes are also assigned to different hierarchy levels,

To give examples, a highest hierarchy level of a network resources within a network node is displayed as a sphere whose nodes represent different racks of the network node. A next lower hierarchy level of network resources is then displayed as a next lower sphere whose nodes represent sub-racks or shelves of racks. The next lower hierarchy level of network resources is then displayed as a next lower sphere whose nodes represent boards belonging to sub-racks. A next lower hierarchy level of network resources is then displayed as a next lower sphere whose nodes represent drawers belonging to boards. A next lower hierarchy level of network resources is then displayed as a next lower sphere whose nodes represent modules belonging to drawers.

Furthermore, a third type of network resources are transmission entities belonging to an equipment of a network node. The transmission entities are placed at hierarchy levels which are below the hierarchy levels of the equipment of a network node, For example, a hierarchy level of a transmission entity is defined by Ethernet Ports, belonging to modules. A transmission entity of a next lower level is then given as data flows, identified by VLAN tags, being associated with Ethernet Paris. Information about the different network resources of the network is assembled and made available, The information given in the form of data provides an assignment of network resources to hierarchy levels of the network. Furthermore, hierarchical dependencies between different network resources are provided.

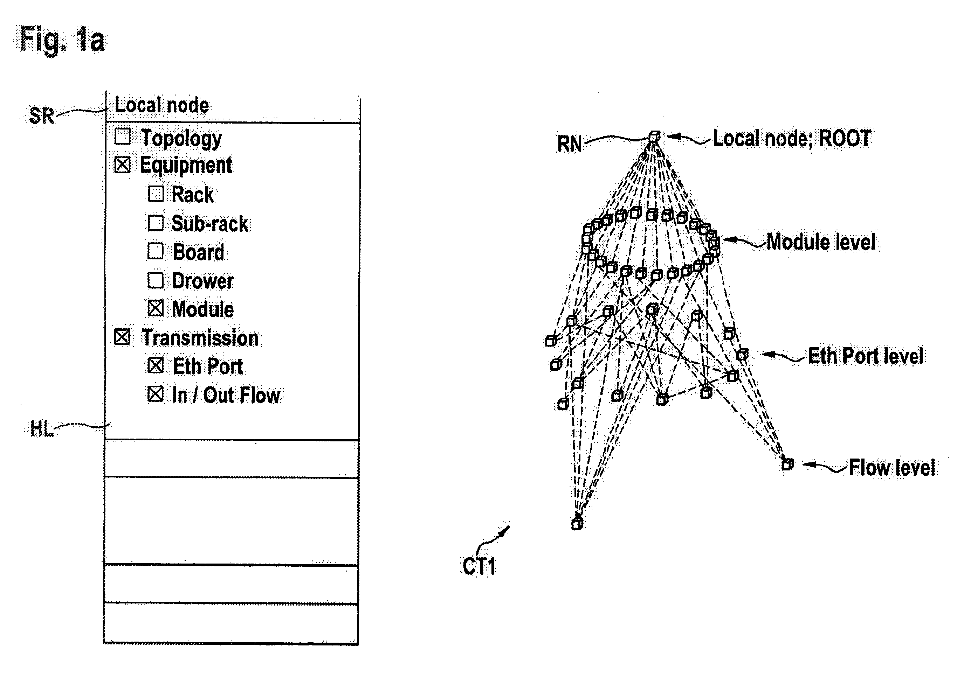

Figure 1a shows a cone tree CT1 displaying the network information. Furthermore, Figure 1a shows a hierarchy list HL indicating different hierarchy levels in an order, which corresponds to the order of the hierarchy levels. Furthermore, Figure 1a shows a menu item SR for selecting a root node of the cone tree CT.

A single node, called Local Node, is selected by the user as the root node RN of the cone tree CT1. The hierarchy levels, which are selected from the list HL by the user, are hierarchy levels corresponding to equipment of the network node and corresponding to transmission entities of network node. The user has selected the hierarchy level to which modules correspond, as well as the hierarchy levels to which Ethernet Ports and data flows correspond.

Network resources which are assigned to the some hierarchy level are displayed as nodes of the same sphere of a cone tree. Hierarchical dependencies between dependent network resources are indicated as displayed links connecting the nodes representing the dependent network resources.

The cone tree CT1 is displayed, such that only nodes which represent network resources that belong to the selected hierarchy levels of the list HL are displayed.

At the top of the cone tree CT1, the local network node is displayed as the root node RN of the cone tree. At the next lower sphere level of the cone tree CT1, nodes representing modules of the local node are displayed. At the next lower sphere level of the cone tree CT1, Ethernet Ports belonging to the modules of the local node are displayed. At the next lower level, nodes which represent the data flows belonging to the Ethernet Ports are displayed.

For network resources, which belong to hierarchy levels that are not selected by the user, no nodes are displayed.

Furthermore, only such links are displayed, which represent direct or indirect hierarchical dependencies of network resources, which are represented by displayed nodes.

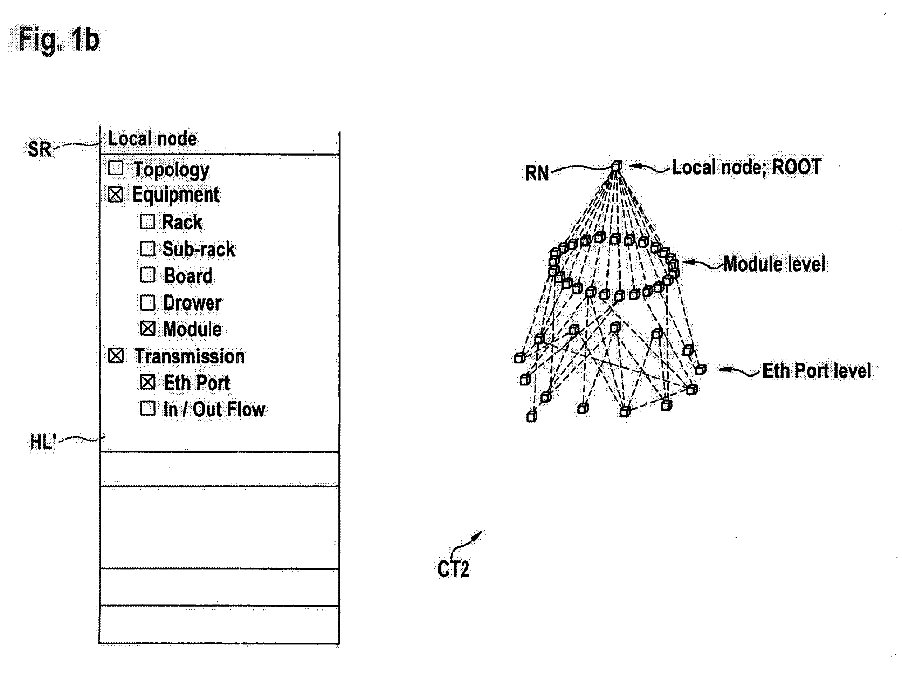

Figure 1b shows a second cone tree CT2 together with a second hierarchy list HL'. The selected root SR of the cone tree CT2 is the same as for the cone tree CT1 in Figure 1 a. The hierarchy list HL' differs from the hierarchy list HL of Figure 1 a, in that the user has deselected the hierarchy level of data flow. Thus, the cone tree CT2 is displayed, such that no nodes at the hierarchy level of data flow are displayed. Furthermore, also no links indicating hierarchical dependencies of the nodes representing data flows are displayed.

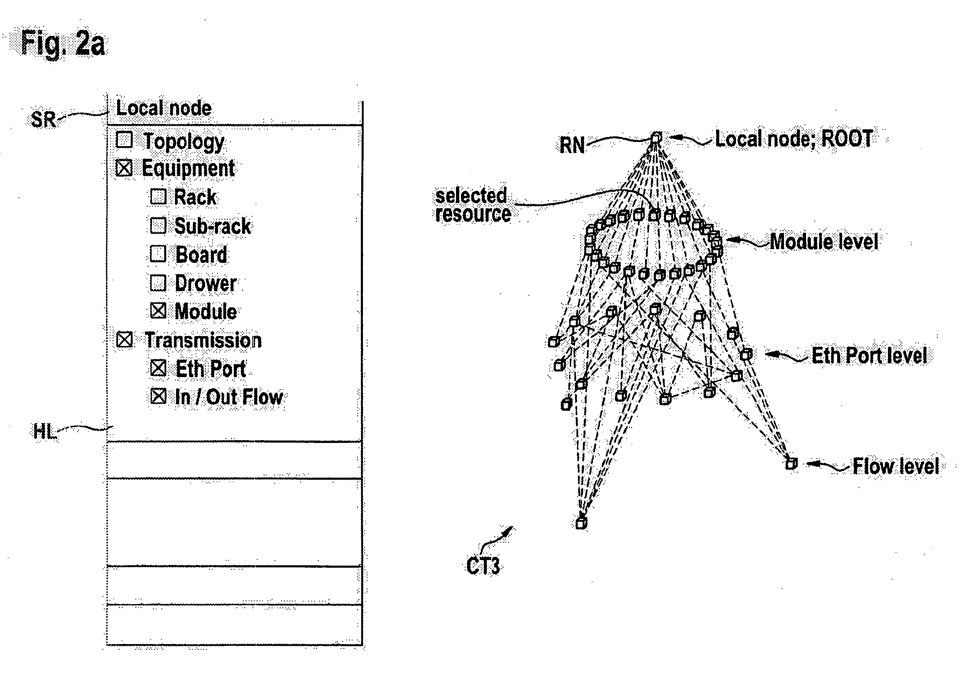

Fig 2a shows a cone tree CT3, which is the same as the cone tree CT1 of Fig 1a. This is due to the fact, that also the hierarchy list HL shown in Figure 2a indicates the same selection as the hierarchy list HL of Figure 1a, and the selected root SR of Figure 2a is the same as the selected root SR of Figure 1 a.

Furthermore, Figure 2a indicates a selection of a network resource by a user. The user selects a network resource by checking the node that represents the network resource. The checking may be carried out by the user via an input device, for example a mouse. The user moves the mouse cursor over a node representing the network resource which he wants to select and then clicks the button of the mouse for checking the node and thus selecting the network resource.

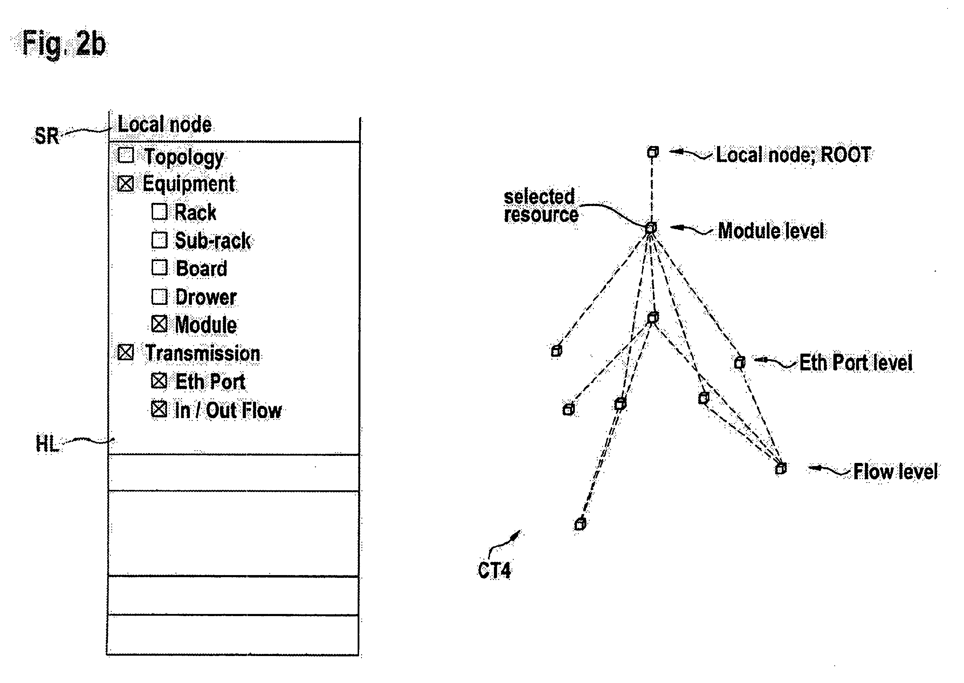

The cone tree CT4 which results from this selection is shown in Figure 2b. Furthermore, a hierarchy list HL and a selected root SR are shown in Figure 2b, which are identical to the hierarchy list HL and the selected root SR of the Figure 2a.

The cone tree CT4, shown in Figure 2b contains only certain nodes that are displayed.

As a first node, the node that represents the selected network resource is displayed. Furthermore, nodes representing network resources, which are assigned to the selected hierarchy levels and which are directly or indirectly dependent on the selected network resource, are displayed. Therefore, in Figure 2b only those nodes at Ethernet Port level and data flow level, which have a direct or indirect hierarchical dependency on the selected resource are displayed. Furthermore, the direct or indirect hierarchical dependencies between the network resources, which are represented by displayed nodes, are indicated by links connecting the nodes representing the dependent network resources.

By selecting a single network resource and thus generating a display of the cone tree CT4 as shown in Figure 2b as described above, the user has a tool at hand, for controlling the amount of displayed network information in a very efficient way. The user may select or deselect further hierarchy levels from the hierarchy list HL shown in Figure 2b, for further modifying the cone tree CT4 and thus causing a display or a hiding of nodes representing network resources at different hierarchy levels. Even furthermore, the user may deselect the selected network resource in order to switch from the cone tree CT4 shown in Figure 2b back to the cone tree CT3 shown in Figure 2a. After this, the user may select a different network resource by selecting the corresponding node in the cone tree CT3 of Figure 2a. Therefore, the user is able to swap between different displayed cone trees and different displayed amounts of network information in a very efficient manner.

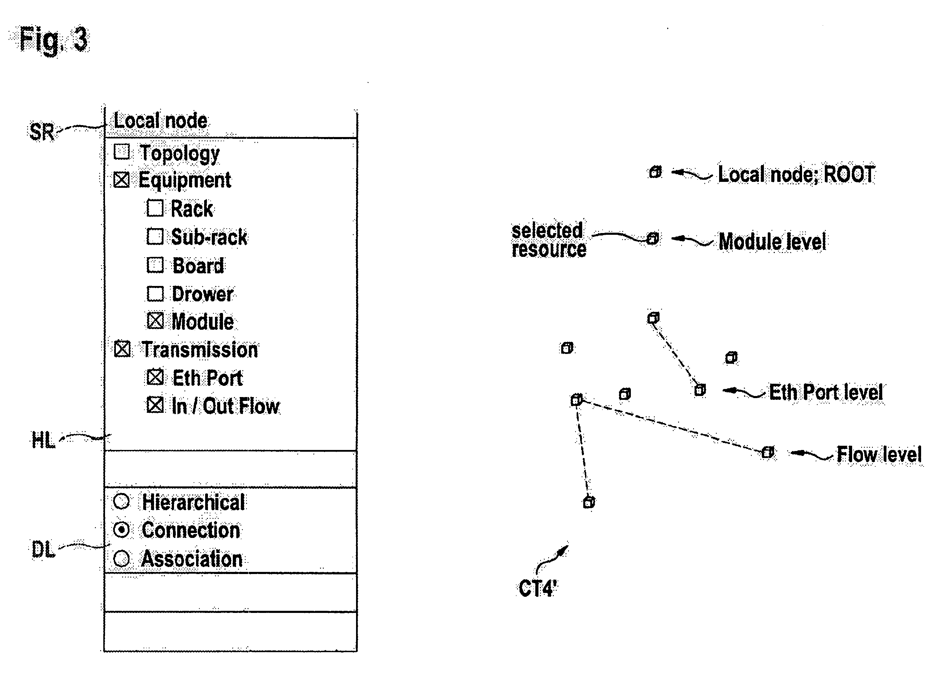

Figure 3 shows the same hierarchy list H L and the same selected root SR as shown in Figure 2b. Furthermore, Figure 3 shows a dependency list DL, which indicates to the user different dependencies between network resources.. One dependency is a hierarchical dependency between network resources. A further dependency is an established transmission connection between network resources. Another dependency is a configuration profile that is shared by network resources.

Having reached the display of the cone tree CT4 in Figure 2b, the user can furthermore modify the displayed cone tree in order to arrive at a cone tree CT4' shown in Figure 3, by selecting as a dependency transmission connections between network resources. The result is, that for the cone tree CT4' the some nodes which are already displayed in the cone tree CT4 are displayed, but different links connecting the displayed nodes are displayed. Now, for the cone tree CT4', links indicating transmission connections between network resources of a some hierarchy level are displayed. Therefore, the cone tree CT4' contains only links, which indicate transmission connections of different data flows and furthermore links which indicate transmission connections of different Ethernet Ports.

Instead of choosing from the dependency list DL the transmission connection of network resources, the user may select as a dependency configuration profiles, which are shored by network resources of different levels. Such a configuration profile is for example an alarm profile, which is shared among different network resources. A profile is for example a set of parameters with respect to a function of a network resource,

Due to choosing as the dependencies configuration profiles shared between network resources, the displayed cone tree CT4" contains the same nodes as the cone tree CT4, but links, which indicate, which nodes have configuration profiles in common,

By being able to choose as dependencies configuration profiles which are shared by network resources, the user is able to check in a very efficient manner, which network resources share a same configuration profile,

When the user selects or deselects a hierarchy level or when the user selects or deselects a node for selecting or deselecting a network resource, the resulting cone tree that is then displayed, is displayed in the same display area, at which previously the previous cone tree was displayed.

Furthermore, when the user selects or deselects a level or when the user selects or deselects a node for selecting or deselecting a network resource, the resulting cone tree is displayed, such that displayed nodes are displayed at the some locations within the display area, at which they were displayed before the selection or deselection by the user. This enables the user, to grasp in a very straightforward manner, in which way a selection or deselection carried out by him affects the displayed cone tree and thus affects the amount of network resources and the amount of network information displayed.

Furthermore, a device for generating a graphical representation of network information is proposed.

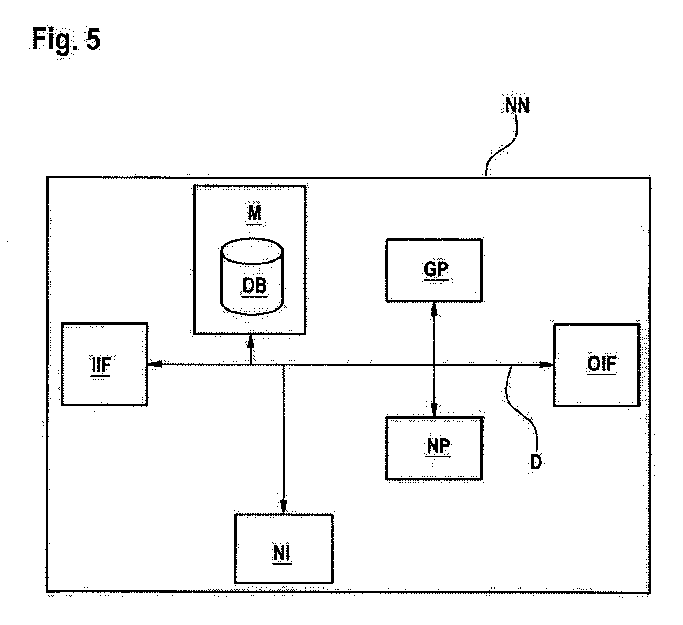

Figure 5 shows a first embodiment of the device in the form of network node NN. Via a network interface NI, the network node receives information about network resources of the network from other network nodes of the network or from a network management system. The network information is passed on to a network processor NP and written by the network processor NP into a memory M. The memory M stores the received network information as well as configuration data of the network node NN itself. For storing this information, the memory M uses a database DB,

The node NN receives from other network nodes information about the other network nodes and the configuration of these network nodes via the network interface NI according to different protocols. A first protocol is the Open Shortest Path First Protocol, which is used for collecting topology information, as defined in the paper RFC 2328 (1998) and as updated by the paper RFC 5709 (2009). The protocol OSPF belongs to the Internet Protocol (IP) suite. For networks supporting the protocol Generalized Multipath Label Switching (GLMPS), the protocol Open Shortest Path First-Traffic Engineering (OSPF-TE) is supported by the network interface NI, as defined in the paper RFC 3630 (2003) and as updated by the paper RFC 4203 (2005).

A further protocol for collecting network information via the network interface NI is the routing protocol Intermediate System to Intermediate System (IS-IS), as defined in the paper ISO/IEC 10589 (2002) for use with the Connectionless Network Protocol (CLNP), and as published in the paper RFC 1142 (1990) for use in conjunction with the Internet Protocol. An extension of IS-IS for support of Generalized Multi Path Label Switching (GMPLS) is defined in the paper RFC 5307 (2008).

A further protocol for collection topology information is the Link Management Protocol (LMP). For using the LMP protocol in conjunction with the Internet Protocol, it is referred to the paper RFC 4204 (2005).

The network information, also called management information, which is collected by the network node NN from other network nodes as well as from the network management system (NMS) is stored within the database DB. The Structure of Management Information (SMI), as described in the paper RFC 2578 (1999), and the Management Information Base (MIB), as described in the paper RFC 3418 (2002), are used for describing management information exchanged by the Simple Network Management Protocol (SNMP), as defined in the paper RFC 1157 (1990). The structure of the database is derived from the MIB information of each involved technologies. Another meta-language for defining network information is the Information Model (IM) for describing information exchanged by the Common Management Information Protocol (CMIP), as defined in the standard ITU-T X.711. For collecting information via the CMIP protocol, the network interface NI supports the CMIP protocol.

Furthermore, the network interface NI supports the protocol for collecting network information according to the Transactional Language 1 (TL1) as defined in the document "GR-831-CORE, Language for Operations Application Messages, Issue 1, November 1996, Telcordia".

The network processor NP retrieves and compiles from the network information stored within the database DB representation data which represents network resources of the network. Furthermore, the network processor NP generates configuration data which indicates a configuration of network resources of the network. Furthermore, the network processor NP generates assignment data, which assigns network resources to hierarchy levels of the network. Furthermore, the network processor NP generates declaration data, which declares dependencies between the network resources. The network processor NP does not necessarily have to generate the representation data, configuration data, assignment data and declaration data in the case that this data is already present within the database. The representation data, configuration data, assignment data and declaration data are also stored within the memory M.

The network node NN contains furthermore a graphical processor GP, which generates data providing graphical representations. One kind of data is data providing a graphical representation of a cone tree. This graphical representation is generated by the graphical processor GP, such that network resources, which are assigned to a same hierarchy level, are represented by nodes of a same sphere of the cone tree. Furthermore, the graphical representation is generated, such that dependencies between dependent network resources are represented by links, which connect the nodes representing the dependent network resources.

Further data for providing a graphical representation of a list of hierarchy levels is generated by the graphical processor GP. The different types of generated data providing the graphical representations may also be combined in one kind of data.

The network node NN contains furthermore an input interface IIF, which is adapted to receive input signals from an input device. The input device is handled by a user for selecting one or more hierarchy levels from the list of hierarchy levels. Thus, the input signals received at the input interface IIF indicate a selection of hierarchy levels that is carried out by the user. The input interface IIF may be a separate interface, or it may be included within the network interface NI, in the case that the input signals are sent via the network to the network node NN. This may be the case, if the user is a network manager handling an input device that is connected to the manager's terminal, and the terminal then sends input signal via the network to the network node NN.

Depending on the selection of hierarchy levels performed by the user, the graphical processor GP generates the graphical data providing a graphical representation of the cone free, such that only those nodes are contained in the cone tree, which represent network resources belonging to the selected hierarchy levels.

For providing the graphical data to a display unit, the graphical data is passed on by the graphical processor GP to an output interface OIF of the network node NN. The output interface OIF may be a graphical interface, to which a display unit, such as a screen, may be connected. Alternatively, the output interface OIF, which may be included within the network interface NI, is an interface for transmitting the graphical data via a network to a terminal. Such an exchange of graphical data between the network node NN and a terminal may be given in the form of a web service, wherein the network node NN acts as a server and the terminal acts as a client running a web-application. The network interface NI, the network processor NP, the input interface IIF, the graphical processor GP, the memory M and the output interface OIF of the network node NN are connected via a data bus D for exchanging data and signals between the different devices of the network node NN.

The different hardware devices of the network node NN are connected with each other via a data bus

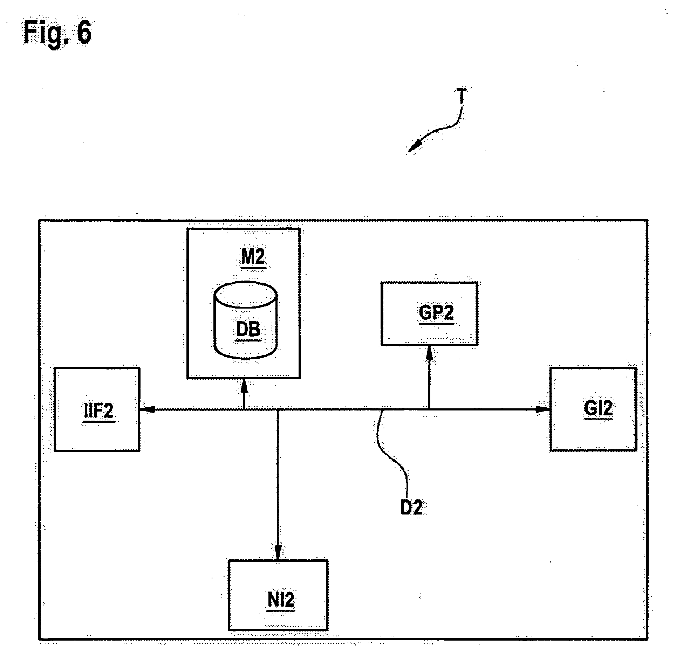

Figure 6 shows a second embodiment of the proposed device in the form of a terminal T. The terminal T contains a network interface N12 via which the terminal T receives from a network node different data providing network information. This data includes representation data representing network resources of the network, configuration data indicating a configuration of the network resources, assignment data assigning network resources to hierarchy levels of the network, and declaration data declaring dependencies between the network resources.

The terminal T receives from the network node the network information in the form of the mentioned data, and stores it in the form of a database DB that is stored in a memory M2. The database DC contains network information according to a meta-language such as the Management Information Base (MIB) or the information Model (IM). For receiving the network information, the network interface NI2 supports the SNMP protocol, the CMIP protocol and/or the protocol TL1.

The terminal T contains furthermore a graphical processor GP2, which is adapted to generate graphical data providing a graphical representation of the cone tree, as previously described according to the embodiment of the network node. Furthermore, the graphical processor GP2 is adapted to generate graphical data providing a graphical representation of a list of hierarchy levels, as previously described according to the embodiment of the network node.

The terminal T contains an input interface IIF2, via which the terminal T receives input signals from an input device which is used by the user. The input signals indicate a selection of one or more hierarchy levels from the list of hierarchy levels.

The graphical processor GP2 passes the data providing graphical representations on to a graphical interface GI2 of the terminal T. Via the graphical interface GI2, signals are provided to a display unit, such as a screen.

The graphical processor GP2 generates the graphical data providing a graphical representation of the cone tree, such that only such nodes are contained within the cone tree, which represent network resources belonging to the selected hierarchy levels.

The different hardware devices of the terminal T are connected with each other via a databus D2.

The network node NN shown in Figure 5 and the terminal T shown in Figure 6 are furthermore adapted to carry out further steps of the proposed method as previously described above.

## Claims

1. Method of displaying network information,
comprising the steps of
- providing representation data which represents network resources of a network,
- providing assignment data which assigns said network resources to hierarchy levels of said network,
- providing declaration data which declares dependencies between said network resources,
- generating a graphical representation of a cone tree, wherein network resources assigned to a same hierarchy level are displayed as nodes of a same sphere of said cone tree (CTI), wherein said dependencies between dependent network resources are indicated as displayed links connecting the nodes representing said dependent network resources,
- presenting a user a list of hierarchy levels (HL),
- upon selection of one or more hierarchy levels from said list by said user, displaying in said cone tree only nodes representing network resources that belong to said selected hierarchy levels.

2. Method according to claim 1,
wherein only such links are displayed, which indicate a direct or indirect dependency of network resources that are represented by said displayed nodes.

3. Method according to claim 2,
comprising the further step of
- upon a selection of a network resource (selected resource) by a checking of a node representing said network resource by said user, displaying only the checked node representing the selected network resource, and nodes representing network resources, which are assigned to said selected hierarchy levels and which are directly or indirectly dependent on said selected network resource.

4. Method according to claim 3,
comprising the further steps of
- providing different declarations of different types of dependencies between network resources,
- presenting to said user a second list (DL) indicating said different types of dependencies,
- upon a selection of a type of dependencies from said list by said user, displaying only such links, which indicate dependencies of the selected type between network resources that ore represented by the displayed nodes.

5. Method according to claim 4,
wherein said types of dependencies between network resources include hierarchical dependencies between network resources of different hierarchy levels, transmission connections between network resources of a same hierarchy level, and configuration profiles shared by network resources of different hierarchy levels.

6. Method according to claim 1 to 5,
wherein said cone tree (*C1,* ..., *CT4, CT4', CT4"*) is displayed in a display area, and wherein after a selection or a deselection of one or more hierarchy levels, or
a selection of a node representing a network resource, said cone tree (*C1, ..., CT4*, *CT4 ; CT4*") is displayed in said same display area.

7. Method according to claim 6,
wherein after a selection or deselection of one or more hierarchy levels, or
a selection of a node representing a network resource,
nodes, which are displayed after said selection or deselection, are displayed at the same locations of said display area, at which they were displayed before said selection or deselection.

8. Device (NN, T) for generating a graphical representation of network information, comprising
- a memory (*M, M2*) adapted to store and to provide
- configuration data indicating a configuration of network resources of a network,
- assignment data assigning said network resources to hierarchy levels, and
- declaration data declaring dependencies between said network resources,
furthermore comprising
- a graphical processor (*GP, GP2*) adapted to generate first graphical data providing a graphical representation of a cone tree, such that network resources assigned to a same hierarchy level are contained in said graphical representation as node of a same sphere of said cone tree, and such that said dependencies between dependent network resources are contained in said graphical representation as links connecting the nodes representing said dependent network resources, and
second graphical data providing a graphical representation of a list of hierarchy levels,
furthermore comprising
- on input interface (*IIF, IIF2*) adapted to receive input signals, said input signals indicating a selection of one or more hierarchy levels from said list of hierarchy levels by a user,
wherein said graphical processor (GP, GP2) is configured to generate said first graphical data, such that only such nodes, which represent network resources belonging to said selected hierarchy levels, are contained in said graphical representation of said cone tree.

## Patentansprüche

1. Verfahren zum Anzeigen von Netzwerkinformationen,
die folgenden Schritte umfassend:
- Bereitstellen von Darstellungsdaten, welche Netzwerkressourcen eines Netzwerks darstellen,
- Bereitstellen von Zuordnungsdaten, welche Netzwerkressourcen zu Hierarchieebenen des besagten Netzwerks zuordnen,
- Bereitstellen von Deklarationsdaten, welche Abhängigkeiten zwischen den besagten Netzwerkressourcen deklarieren,
- Erzeugen einer grafischen Darstellung eines Konusbaums, in welcher einer selben Hierarchieebene zugeordnete Netzwerkressourcen als Knoten einer selben Kugel des besagten Konusbaums (*CT1*) angezeigt werden, wobei die besagten Abhängigkeiten zwischen abhängigen Netzwerkressourcen als angezeigte Strecken, welche die die besagten abhängigen Netzwerkressourcen darstellenden Knoten verbinden, angegeben werden,
- Präsentieren einer Liste von Hierarchieebenen (HL) an einen Benutzer,
- nach Auswählen einer oder mehrerer Hierarchieebenen aus der besagten Liste durch den Benutzer, Anzeigen, in dem besagten Konusbaum, nur derjenigen Knoten, welche Netzwerkressourcen darstellen, die den ausgewählten Hierarchieebenen angehören.

2. Verfahren nach Anspruch 1,
wobei nur diejenigen Strecken angezeigt werden, welche eine direkte oder indirekte Abhängigkeit von Netzwerkressourcen, die durch die besagten angezeigten Knoten dargestellt sind, angeben.

3. Verfahren nach Anspruch 2,
den folgenden weiteren Schritt umfassend:
- Nach Auswählen einer Netzwerkressource (*ausgewählte Ressource*) durch eine Überprüfung eines Knotens, welcher die besagte Netzwerkressource darstellt, durch den besagten Benutzer, Anzeigen nur desjenigen überprüften Knotens, welcher die ausgewählte Netzwerkressource darstellt, und von Netzwerkressourcen darstellenden Knoten, welche den besagten ausgewählten Hierarchieebenen zugeordnet und direkt oder indirekt von der besagten ausgewählten Netzwerkressource abhängig sind.

4. Verfahren nach Anspruch 3,
die folgenden weiteren Schritte umfassend:
- Bereitstellen unterschiedlicher Deklarationen unterschiedlicher Arten der Abhängigkeit zwischen Netzwerkressourcen,
- Präsentieren einer zweiten Liste (*DL*), welche die besagten unterschiedlichen Abhängigkeitsarten angibt, an den besagten Benutzer,
- nach Auswählen einer Art der Abhängigkeit aus der besagten Liste durch den Benutzer, Anzeigen nur derjenigen Strecken, welche Abhängigkeiten der ausgewählten Art zwischen Netzwerkressourcen, die durch die angezeigten Knoten dargestellt sind, angeben.

5. Verfahren nach Anspruch 4,
wobei die besagten Arten der Abhängigkeit zwischen Netzwerkressourcen hierarchische Abhängigkeiten zwischen Netzwerkressourcen unterschiedlicher Hierarchieebenen, Übertragungsverbindungen zwischen Netzwerkressourcen einer selben Hierarchieebene und Netzwerkressourcen unterschiedlicher Hierarchieebenen gemeinsame Konfigurationsprofile umfassen.

6. Verfahren nach Anspruch 1 bis 5,
wobei der besagte Konusbaum (*C1*, ..., *CT4, CT4', CT4"*) in einem Anzeigebereich angezeigt wird, und wobei nach einer Auswahl oder einer Abwahl einer oder mehrerer Hierarchieebenen, oder einer Auswahl eines Knotens, welcher eine Netzwerkressource darstellt, der besagte Konusbaum (*C1*, ..., *CT4, CT4', CT4"*) in dem besagten selben Anzeigebereich angezeigt wird.

7. Verfahren nach Anspruch 6,
wobei nach einer Auswahl oder Abwahl einer oder mehrerer Hierarchieebenen, oder einer Auswahl eines Knotens, welcher eine Netzwerkressource darstellt, Knoten, welche nach der besagten Auswahl oder Abwahl angezeigt werden, an denselben Stellen des besagten Anzeigebereichs, an denen sie vor der besagten Auswahl oder Abwahl angezeigt wurden, angezeigt werden.

8. Vorrichtung (NN, T) zum Erzeugen einer grafischen Darstellung von Netzwerkinformationen, umfassend:
- Einen Speicher (*M, M2*), ausgelegt für das Speichern und Bereitstellen von
- Konfigurationsdaten, welche eine Konfiguration von Netzwerkressourcen eines Netzwerks angeben,
- Zuordnungsdaten, welche die besagten Netzwerkressourcen zu Hierarchieebenen zuordnen, und
- Deklarationsdaten, welche Abhängigkeiten zwischen den besagten Netzwerkressourcen deklarieren,
weiterhin umfassend
- einen grafischen Prozessor (*GP, GP2*), ausgelegt für das Erzeugen von ersten grafischen Daten, welche eine grafische Darstellung eines Konusbaums bereitstellen, wobei die einer selben Hierarchieebene zugeordneten Netzwerkressourcen als Knoten einer selben Kugel des besagten Konusbaums in der grafischen Darstellung enthalten sind, und wobei die besagten Abhängigkeiten zwischen abhängigen Netzwerkressourcen als Strecken, welche die die besagten abhängigen Netzwerkressourcen darstellenden Knoten verbinden, in der besagten grafischen Darstellung enthalten sind, und
von zweiten grafischen Daten, welche eine grafische Darstellung einer Liste von Hierarchieebenen bereitstellen,
weiterhin umfassend
- eine Eingangsschnittstelle (*IIF, IIF2*), ausgelegt für den Empfang von Eingangssignalen, wobei die besagten Eingangssignale eine Auswahl von einer oder mehreren Hierarchieebenen aus der besagten Liste von Hierarchieebenen durch einen Benutzer angeben,
wobei der besagte grafische Prozessor (*GP, GP2*) für das Erzeugen der besagten ersten grafischen Daten konfiguriert ist, wobei nur diejenigen Knoten, welche der besagten ausgewählten Hierarchieebene angehörende Netzwerkressourcen darstellen, in der besagten grafischen Darstellung des besagten Konusbaums enthalten sind.

## Revendications

1. Procédé d'affichage d'informations de réseau, comprenant les étapes suivantes
- fournir des données de représentation qui représentent des ressources de réseau d'un réseau,
- fournir des données d'attribution qui attribuent lesdites ressources de réseau à des niveaux hiérarchiques dudit réseau,
- fournir des données de déclaration qui déclarent des dépendances entre lesdites ressources de réseau,
- générer une représentation graphique d'un arbre conique, dans lequel des ressources de réseau attribuées à un même niveau hiérarchique sont affichées comme noeuds d'une même sphère dudit arbre conique (*CT1*), dans lequel lesdites dépendances entre des ressources de réseau dépendantes sont indiquées comme des liaisons affichées reliant les noeuds représentant lesdites ressources de réseau dépendantes,
- présenter à un utilisateur une liste de niveaux hiérarchiques (*HL*),
- lors de la sélection d'un ou de plusieurs niveaux hiérarchiques à partir de ladite liste par ledit utilisateur, afficher dans ledit arbre conique uniquement des noeuds représentant des ressources de réseau qui appartiennent auxdits niveaux hiérarchiques sélectionnés.

2. Procédé selon la revendication 1,
dans lequel on affiche seulement les liaisons qui indiquent une dépendance directe ou indirecte de ressources de réseau qui sont représentées par lesdits noeuds affichés.

3. Procédé selon la revendication 2,
comprenant l'étape supplémentaire suivante
- lors d'une sélection d'une ressource de réseau (*ressource sélectionnée*) par une vérification d'un noeud représentant ladite ressource de réseau par ledit utilisateur, afficher uniquement le noeud vérifié représentant la ressource de réseau sélectionnée, et des noeuds représentant des ressources de réseau, qui sont attribuées auxdits niveaux hiérarchiques sélectionnés et qui sont directement ou indirectement dépendantes de ladite ressource de réseau sélectionnée.

4. Procédé selon la revendication 3,
comprenant les étapes supplémentaires suivantes
- fournir des déclarations différentes de types de dépendances différents entre des ressources de réseau,
- présenter audit utilisateur une deuxième liste (*DL*) indiquant lesdits types de dépendances différents,
- lors d'une sélection d'un type de dépendances à partir de ladite liste par ledit utilisateur, afficher seulement les liaisons qui indiquent des dépendances du type sélectionné entre des ressources de réseau qui sont représentées par les noeuds affichés.

5. Procédé selon la revendication 4,
dans lequel lesdits types de dépendances entre des ressources de réseau comprennent des dépendances hiérarchiques entre des ressources de réseau de niveaux hiérarchiques différents, des connexions de transmission entre des ressources de réseau d'un même niveau hiérarchique, et des profils de configuration partagés par des ressources de réseau de niveaux hiérarchiques différents.

6. Procédé selon les revendications 1 à 5,
dans lequel ledit arbre conique (*C1*, ..., *CT4, CT4', CT4"*) est affiché dans une zone d'affichage, et dans lequel après une sélection ou une désélection d'un ou de plusieurs niveaux hiérarchiques, ou une sélection d'un noeud représentant une ressource de réseau, ledit arbre conique (*C1,* ..., *CT4, CT4', CT4"*) est affiché dans ladite même zone d'affichage.

7. Procédé selon la revendication 6,
dans lequel après une sélection ou une désélection d'un ou de plusieurs niveaux hiérarchiques, ou une sélection d'un noeud représentant une ressource de réseau, des noeuds, qui sont affichés après ladite sélection ou désélection, sont affichés aux mêmes emplacements de ladite zone d'affichage, au niveau de laquelle ils ont été affichés avant ladite sélection ou désélection.

8. Dispositif (NN, T) pour générer une représentation graphique d'informations de réseau, comprenant
- une mémoire (*M, M2*) adaptée pour stocker et pour fournir
- des données de configuration indiquant une configuration de ressources de réseau d'un réseau,
- des données d'attribution attribuant lesdites ressources de réseau à des niveaux hiérarchiques, et
- des données de déclaration déclarant des dépendances entre lesdites ressources de réseau,
comprenant en outre
- un processeur graphique (*GP, GP2*) adapté pour générer des premières données graphiques fournissant une représentation graphique d'un arbre conique, de sorte que des ressources de réseau attribuées à un même niveau hiérarchique soient contenues dans ladite représentation graphique comme noeud d'une même sphère dudit arbre conique, et de sorte que lesdites dépendances entre des ressources de réseau dépendantes soient contenues dans ladite représentation graphique comme liaisons reliant les noeuds représentant lesdites ressources de réseau dépendantes, et des deuxièmes données graphiques fournissant une représentation graphique d'une liste de niveaux hiérarchiques,
comprenant en outre
- une interface d'entrée (*IIF, IIF2*) adaptée pour recevoir des signaux d'entrée, lesdits signaux d'entrée indiquant une sélection d'un ou de plusieurs niveaux hiérarchiques à partir de ladite liste de niveaux hiérarchiques par un utilisateur,
dans lequel ledit processeur graphique (GP, GP2) est configuré pour générer lesdites premières données graphiques, de sorte que seuls les noeuds, qui représentent des ressources de réseau appartenant auxdits niveaux hiérarchiques sélectionnés, soient contenus dans ladite représentation graphique dudit arbre conique.
